# EUROPEAN PATENT SPECIFICATION

(11) **EP 3 697 077 B1**
(45) Date of publication and mention of the grant of the patent: **08.06.2022**
(21) Application number: 18889249.1
(22) Date of filing: 22.11.2018
(51) Int. Cl.: H04N 5/225, G02B 21/02, G02B 13/00, G02B 7/02

(54) **CAMERA ASSEMBLY AND ELECTRONIC DEVICE HAVING SAME**
KAMERAANORDNUNG UND ELEKTRONISCHES GERÄT DAMIT
ENSEMBLE CAMÉRA ET DISPOSITIF ÉLECTRONIQUE COMPRENANT CE DERNIER

(30) Priority: 11.12.2017 CN 201711309674; 11.12.2017 CN 201721732136 U
(43) Date of publication of application: 19.08.2020
(73) Proprietor: GUANGDONG OPPO MOBILE TELECOMMUNICATIONS CORP., LTD., Wusha, Chang'an Dongguan, Guangdong 523860 (CN)
(72) Inventor: JIA, Yuhu, Dongguan, Guangdong 523860 (CN)
(74) Representative: Manitz Finsterwald Patent- und Rechtsanwaltspartnerschaft mbB
(86) International application number: PCT/CN2018/116843
(87) International publication number: WO 2019/114513

(56) References cited:
- EP-A2- 1 239 519
- WO-A1-2016/195403
- WO-A1-2017/030351
- CN-A- 1 918 903
- CN-A- 105 635 534
- CN-A- 107 888 813
- CN-U- 205 679 895
- CN-U- 207 460 352
- JP-A- 2001 051 319
- JP-A- 2011 064 737
- KR-A- 20130 028 419

## Description

### FIELD

The present disclosure relates to a technical field of electronic devices, and more particularly to a camera assembly and an electronic device having the same.

### BACKGROUND

In the related art, a camera is provided in an electronic device for taking photos and videos, and occupies a certain space in the electronic device.

WO 2017/030351 A1 relates to a camera module, including: a lens; a heating layer positioned on the lens so as to generate heat when power is supplied thereto; and a heating wire, which is positioned on the surface of the lens or of the heating layer, which generates heat when a current is supplied thereto from an external power supply, and which is electrically connected to the heating layer.

WO 2016/195403 A1 relates to a camera module, including: a lens barrel having a hollow formed therein, including at least one lens aligned in the optical axis of the hollow; a holder having formed therein an internal space in which a part of the lens barrel is accommodated; a casing coupled to the holder and having formed therein an internal space in which a printed circuit board is accommodated; and a first heater which is electrically connected to the printed circuit board to heat the lens.

JP 2011 064737 A relates to an optical system component for housing optical elements inside, the inner wall face of the component is coated with a black coating film formed from a film forming resin containing a plurality of fine particles, wherein the plurality of fine particles has shapes of a plurality of types.

### SUMMARY

The present disclosure seeks to solve at least one of the technical problems existing in the related art. Hence, the present disclosure proposes a camera assembly which has a small volume, thus facilitating a decrease of an overall volume of the camera.

The present disclosure also proposes an electronic device including the above camera assembly.

The present invention is defined by the independent claim 1, and the preferable features according to the present invention are defined by the dependent claims. Any embodiment in the present disclosure that does not fall within the scope of the present invention should be regarded as an example for understanding the present invention.

In the camera assembly according to the embodiment of the present disclosure, since the one side surface of the inner surface and the outer surface of the protection lens is provided with the first protruding part or the first recessed part opposite to the first lens, a basic thickness of the protection lens may be utilized as a base for forming a first optical lens (a first convex lens or a first concave lens) on the protection lens. Thus, the first optical lens on the protection lens replaces one of the plurality of the first lenses in the related art, which is equivalent to that the one of the plurality of the first lenses in the lens frame in the related art is integrated into the protection lens, such that the number of the first lenses in the present disclosure is one less than that of the first lenses in the related art, thereby decreasing the number of the first lens in the lens frame and then reducing an axial size of the lens frame. Therefore, the overall size and volume of the camera assembly are drastically reduced.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of the present disclosure will become apparent and readily appreciated from the following descriptions of embodiments made with reference to the drawings.
Fig. 1 is a schematic view of a camera assembly according to a first embodiment of the present disclosure.
Fig. 2 is a schematic view of a camera assembly according to a second embodiment of the present disclosure.
Fig. 3 is a schematic view of a camera assembly according to a third embodiment of the present disclosure.
Fig. 4 is a schematic view of a camera assembly according to a fourth embodiment of the present disclosure.
Fig. 5 is a schematic view of a camera assembly according to a fifth embodiment of the present disclosure.
Fig. 6 is a schematic view of a camera assembly according to a sixth embodiment of the present disclosure.
Fig. 7 is a schematic view of a camera assembly according to a seventh embodiment of the present disclosure.
Fig. 8 is a schematic view of a camera assembly according to an eighth embodiment of the present disclosure.
Fig. 9 is a schematic view of an electronic device according to an embodiment of the present disclosure.

### DETAILED DESCRIPTION

Embodiments of the present disclosure are further described. Examples of the embodiments are illustrated in the accompanying drawings. The same or similar elements and the elements having same or similar functions are denoted by like reference numerals throughout the descriptions. The embodiments described below with reference to the accompanying drawings are examples, are intended to be used to explain the present disclosure, and cannot be construed as limitation to the present disclosure.

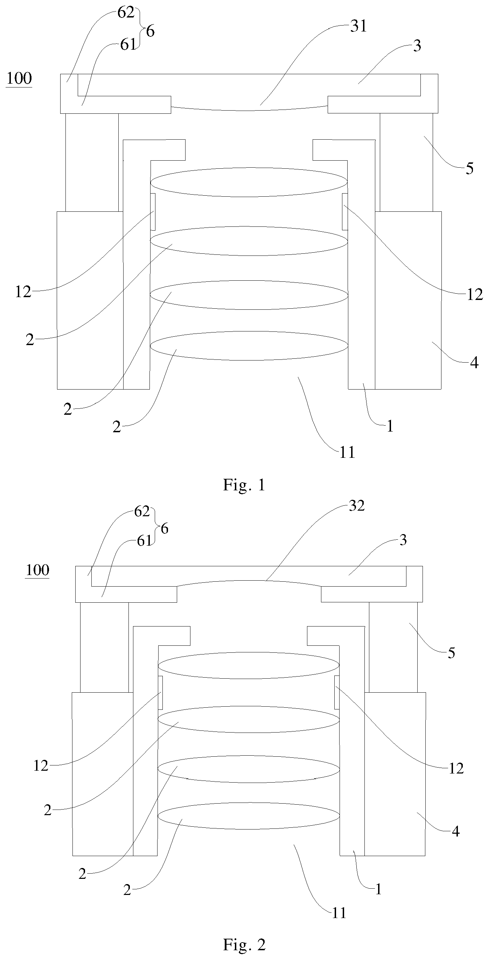

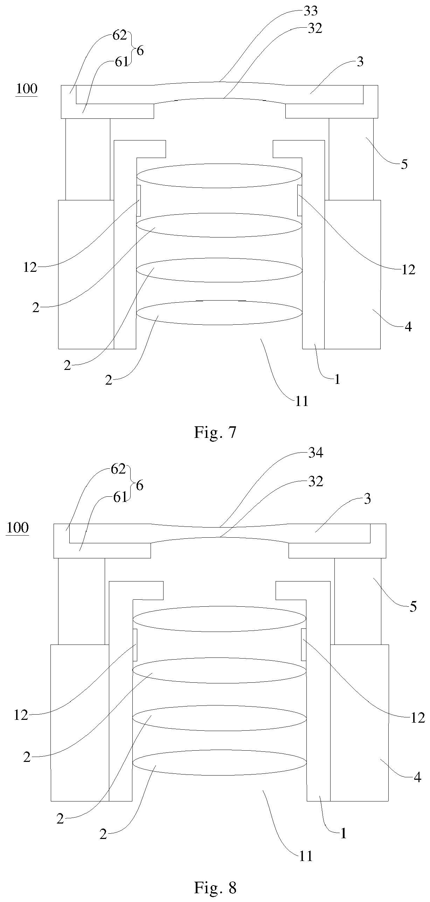

A camera assembly 100 according to embodiments of the present disclosure will be described below with reference to Figs. 1-9. The camera assembly 100 may be used in an electronic device 500. The camera assembly 100 may be a front camera assembly 100 or a rear camera assembly 100 of the electronic device 500.

As illustrated in Fig. 1, the camera assembly 100 according to an embodiment of the present disclosure includes a lens frame 1, a plurality of first lenses 2 and a protection lens 3.

In some embodiments, the lens frame 1 has a mounting cavity 11, the plurality of first lenses 2 are arranged at intervals in the mounting cavity 11, and a periphery of each first lens 2 is connected with an inner circumferential wall of the mounting cavity 11. As illustrated in Fig. 1 and Fig. 2, the plurality of first lenses 2 may be arranged at intervals in an axial direction of the mounting cavity 11. Thus, the first lens 2 may be disposed in the mounting cavity 11 which is defined by the lens frame 1, so as to facilitate the mounting and assembling of the first lens 2. In addition, since the plurality of first lenses are arranged at intervals in the mounting cavity 11, the focusing effect of the camera assembly 100 can be improved, thereby enhancing an image-capturing performance of the camera assembly 100.

As illustrated in Fig. 1 and Fig. 2, the protection lens 3 is arranged at an outer side of the lens frame 1 and spaced apart from the lens frame 1, one side surface of an inner surface and an outer surface of the protection lens 3 is provided with a first protruding part 31 or a first recessed part 32, and the first protruding part 31 and the first recessed part 32 are opposite to the first lens 2. When the one side surface of the inner surface and the outer surface of the protection lens 3 is provided with the first protruding part 31, a first convex lens may be formed on the protection lens 3. When the one side surface of the inner surface and the outer surface of the protection lens 3 is provided with the first recessed part 32, a first concave lens may be formed on the protection lens 3.

Thus, a basic thickness of the protection lens 3 may be utilized as a base for forming a first optical lens (e.g. the first convex lens or the first concave lens) on the protection lens 3. The first optical lens on the protection lens 3 may replace one of the plurality of the first lenses 2 in the related art, which is equivalent to that the one of the plurality of the first lenses 2 in the lens frame 1 in the related art is integrated into the protection lens 3, such that the number of the first lenses 2 in the present disclosure is one less than that of the first lenses 2 in the related art, thereby decreasing the number of the first lens 2 in the lens frame 1 and then reducing an axial size of the lens frame 1. On the premise of ensuring the image-capturing effect of the camera assembly 100, the overall size and volume of the camera assembly 100 are drastically reduced.

For example, in the embodiment of Fig. 1, a part of the inner surface of the protection lens 3 protrudes in a direction approaching a center of the lens frame 1 to form the first protruding part 31. Thus, the first convex lens may be formed on the protection lens 3, thereby reducing the number of the first lenses 2 in the lens frame 1. Moreover, since the first protruding part 31 is formed on the inner surface of the protection lens 3, an influence of the first protruding part 31 on the appearance of the camera assembly 100 is avoided, thereby improving the aesthetics of the camera assembly 100.

In the embodiment of Fig. 2, a part of the inner surface of the protection lens 3 is recessed in a direction running away from the center of the lens frame 1 to form the first recessed part 32. Thus, the first concave lens may be formed on the protection lens 3, thereby reducing the number of the first lenses 2 in the lens frame 1. Moreover, since the first recessed part 32 is formed on the inner surface of the protection lens 3, an influence of the first recessed part 32 on the appearance of the camera assembly 100 is avoided, thereby improving the aesthetics of the camera assembly 100.

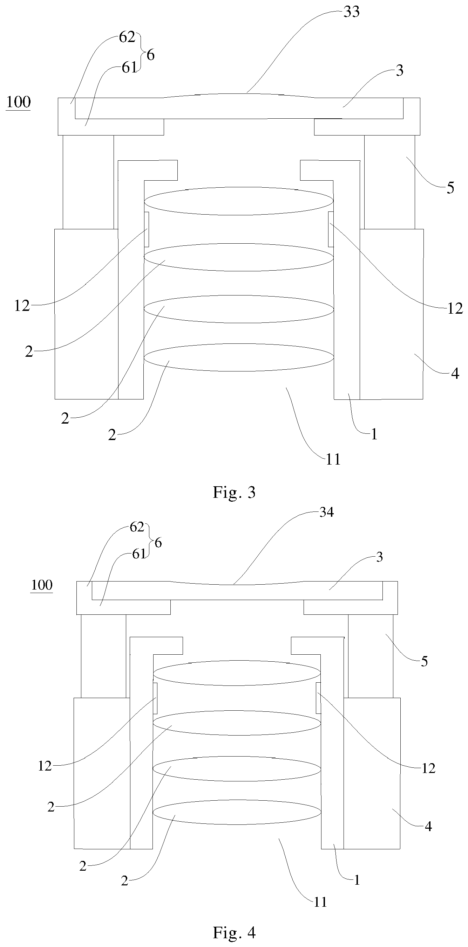

In the embodiment of Fig. 3, a part of the outer surface of the protection lens 3 protrudes in the direction running away from the center of the lens frame 1 to form the first protruding part 31. In the embodiment of Fig. 4, a part of the outer surface of the protection lens 3 is recessed in the direction approaching the center of the lens frame 1 to form the first recessed part 32. Thus, the number of the first lens 2 in the lens frame 1 can also be reduced.

It should be noted herein that when a human body faces and stands parallel to the camera assembly 100, a side of the camera assembly 100 adjacent to the human body is the direction referred as "outer" in the present disclosure, and a side of the camera assembly 100 away from the human body is the direction referred as "inner" in the present disclosure.

In the camera assembly 100 according to the embodiment of the present disclosure, since the one side surface of the inner surface and the outer surface of the protection lens 3 is provided with the first protruding part 31 or the first recessed part 32 opposite to the first lens 2, the basic thickness of the protection lens 3 may be utilized as the base for forming the first optical lens (the first convex lens or the first concave lens) on the protection lens 3. Thus, the first optical lens on the protection lens 3 replaces one of the plurality of the first lenses 2 in the related art, which is equivalent to that the one of the plurality of the first lenses 2 in the lens frame 1 in the related art is integrated into the protection lens 3, such that the number of the first lenses 2 in the present disclosure is one less than that of the first lenses 2 in the related art, thereby decreasing the number of the first lens 2 in the lens frame 1 and then reducing the axial size of the lens frame 1. Therefore, the overall size and volume of the camera assembly 100 are drastically reduced.

According to some embodiments of the present disclosure, the one side surface of the inner surface and the outer surface of the protection lens 3 is etched to form the first protruding part 31 or the first recessed part 32. The technology is simple and the processing is convenient.

According to some specific embodiments of the present disclosure, a central axis of the first protruding part 31 or the first recessed part 32 coincides with an optical axis of the first lens 2. Thus, an optical axis of the first optical lens formed at the first protruding part 31 or the first recessed part 32 may coincide with the optical axis of the first lens 2, thereby facilitating the improvement of the focusing effect of the camera assembly 100 and then enhancing image-capturing performance of the camera assembly 100.

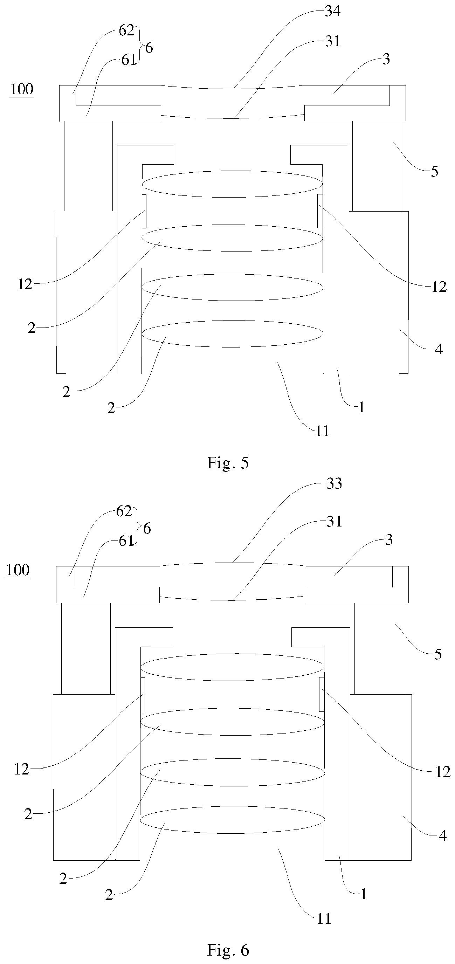

According to some further embodiments of the present disclosure, as illustrated in Figs. 5-8, the other side surface of the inner surface and the outer surface of the protection lens 3 is provided with a second protruding part 33 or a second recessed part 34 opposite to the first lens 2. When the other side surface of the inner surface and the outer surface of the protection lens 3 is provided with the second protruding part 33, a second convex lens may be formed on the protection lens 3. When the other side surface of the inner surface and the outer surface of the protection lens 3 is provided with the second recessed part 34, a second concave lens may be formed on the protection lens 3.

Thus, the basic thickness of the protection lens 3 may be utilized as a base for forming a second optical lens (i.e. the second convex lens or the second concave lens) on the protection lens 3. The second optical lens on the protection lens 3 may replace one of the plurality of the first lenses 2 in the related art, which is equivalent to that the one of the plurality of the first lenses 2 in the lens frame 1 in the related art is integrated into the protection lens 3, such that the number of the first lenses 2 in the present disclosure is further one less than that of the first lenses 2 in the related art, i.e. totally two less than that of the first lenses in the related art, thereby further decreasing the number of the first lens 2 in the lens frame 1 and then further reducing the axial size of the lens frame 1. On the premise of ensuring the image-capturing effect of the camera assembly 100, the overall size and volume of the camera assembly 100 are drastically reduced.

In some embodiments of the present disclosure, the other side surface of the inner surface and the outer surface of the protection lens 3 is etched to form the second protruding part 33 or the second recessed part 34. The technology is simple and the processing is convenient.

According to some specific embodiments of the present disclosure, a central axis of the second protruding part 33 or the second recessed part 34 coincides with the optical axis of the first lens 2. Thus, an optical axis of the second optical lens formed at the second protruding part 33 or the second recessed part 34 coincides with the optical axis of the first lens 2, thereby facilitating the improvement of the focusing effect of the camera assembly 100 and then enhancing image-capturing performance of the camera assembly 100.

According to some further embodiments of the present disclosure, the camera assembly 100 further includes a decoration member 6, and the decoration member 6 includes a support part 61 and a decoration part 62. The support part 61 is provided with a through transmission hole, i.e., the transmission hole runs through the support part 61. The protection lens 3 is arranged on the support part 61, and the first protruding part 31 or the first recessed part 32 is opposite to the transmission hole. The decoration part 62 is connected with the support part 61 and surrounds a periphery of the protection lens 3. As illustrated in Figs. 1-8, an extension direction of the decoration part 62 is perpendicular to the support part 61. Thus, the support part 61 may be used to fix and support the protection lens 3 so as to realize the fixing of the protection lens 3 easily, and also, the protection lens 3 may be protected by the decoration part 62 so as to improve the reliability of the protection lens 3. In addition, the decoration part 62 can also improve the overall appearance of the camera assembly 100.

In some embodiments of the present disclosure, the outer surface of the protection lens 3 is lower than or flush with an outer end face of the decoration part 62. In other words, the outer surface of the protection lens 3 is lower than the outer end face of the decoration part 62, or the outer surface of the protection lens 3 is flush with the outer end face of the decoration part 62. Thus, the protective effect of the decoration part 62 on the protection lens 3 is further enhanced, and then the reliability of the protection lens 3 is further improved.

According to some specific embodiments of the present disclosure, a light-shielding layer 12 is provided between at least one pair of adjacent first lenses 2 in the plurality of first lenses 2 and arranged on the inner circumferential wall of the mounting cavity 11. In particular, the light-shielding layer 12 may be arranged between each adjacent two first lenses 2, or between a part of adjacent first lenses 2.

Thus, with the arrangement of the light-shielding layer 12 on the inner circumferential wall of the mounting cavity 11, the interference light outside the camera assembly 100 can be effectively blocked from entering the camera assembly 100, so as to avoid defects such as overexposure or partially becoming white and blurring. Moreover, the light-shielding layer 12 can also effectively prevent the light inside the camera assembly 100 from being reflected so as not to affect the image-capturing effect, thus improving the image-capturing effect of the camera assembly 100.

According to some embodiments of the present disclosure, a surface of the light-shielding layer 12 facing towards an interior of the mounting cavity 11 may be a frosted surface. It may be understood that, by configuring the surface of the light-shielding layer 12 facing towards the interior of the mounting cavity 11 as the frosted surface, the light inside the camera assembly 100 can be effectively prevented from being reflected on the inner surface of the mounting cavity 11 so as not to affect the image-capturing effect, thus further improving the image-capturing effect of the camera assembly 100.

Other components (such as a motor 4, a sealing member 5 or the like) of the camera assembly 100 according to the embodiments of the present disclosure are known to those skilled in the related art, and will not be described in detail herein.

The electronic device 500 according to the embodiments of the present disclosure includes a housing assembly 520 and a camera assembly 100 according to the above embodiments of the present disclosure.

In some embodiments, the housing assembly 520 is provided with a mounting hole, and the camera assembly is arranged in the mounting hole. In some embodiments of the present disclosure, the housing assembly 520 may include a middle frame, a cover plate, and a rear cover, the cover plate is arranged at a front side of the middle frame, and the rear cover is arranged at a rear side of the middle frame.

It may be understood that the camera assembly 100 may be a front camera assembly 100 of the electronic device 500 or a rear camera assembly 100 of the electronic device 500. One or more camera assemblies 100 may be provided. When the camera assembly 100 is the front camera assembly 100, the protection lens 3 in the camera assembly 100 may be integrated with the cover plate of the electronic device 500. When the camera assembly 100 is the rear camera assembly 100, a through hole may be formed in the rear cover of the electronic device 500, and the protection lens 3 is opposite to the through hole.

Since the camera assembly 100 according to the above embodiments of the present disclosure is arranged in the electronic device 500 according to the embodiments of the present disclosure, the overall performance of the electronic device 500 is improved.

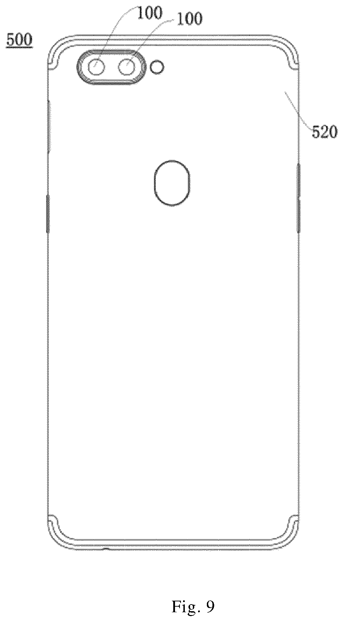

The electronic device 500 according to embodiments of the present disclosure will be described in detail in one specific embodiment with reference to Fig. 9. It should be understood that the description below is an example and cannot be construed as a limitation to the present disclosure.

It should be noted that "the electronic device 500" used herein includes, but is not limited to devices for receiving/transmitting a communication signal via a wired line connection (for example, via Public Switched Telephone Network (PSTN), Digital Subscriber Line (DSL), a digital cable, direct cable connection, and/or another data connection/network) and/or via a wireless interface (for example, cellular networks, wireless local area networks (WLANs), digital television networks (such as DVB-H networks), satellite networks, AM-FM broadcast transmitters, and/or another communication terminal). Examples of the electronic device 500 include, but are not limited to, satellite or cellular telephones; personal communication system (PCS) terminals that may combine cellular radiotelephone with data processing, fax, and data communication capabilities; PDAs that may include radiotelephones, pagers, Internet/Intranet access, web browsers, memo pads, calendars, and/or global positioning system (GPS) receivers; and conventional laptop and/or palmtop receivers or other electronic devices 500 including radiotelephone transceivers.

The electronic device 500 may be a device capable of acquiring data from outside and processing the data, or the electronic device 500 may be a device including a built-in battery and capable of charging the battery by drawing a current from outside, for example, a mobile phone (the embodiment as illustrated in Fig. 3), a tablet computer, a computing device or an information display device. The mobile phone is merely an example of the electronic device 500, which is not specifically limited in the present disclosure. The present disclosure may be applied to mobile phones, tablet computers and other electronic devices 500, which is not limited in the present disclosure.

In embodiments of the present disclosure, the mobile phone can include a radio-frequency circuit, a memory, an input unit, a wireless fidelity (Wi-Fi) module, a display unit, a sensor, an audio circuit, a processor, a camera assembly 100, a battery or the like.

The radio-frequency circuit may be used to receive and transmit a signal during information transmission and reception or during a call. Especially, when downlink information from a base station is received, the radio-frequency circuit sends the downlink information to the processor for processing, and additionally sends uplink data from the mobile phone to the base station. Usually, the radio-frequency circuit includes but is not limited to an antenna, at least one amplifier, a transceiver, a coupler, a low-noise amplifier, a duplexer and etc. In addition, the radio-frequency circuit may communicate with the network and other devices via wireless communication.

The memory may be used to store software programs and modules, and the processor runs various function applications in the mobile phone and performs data processing by running the software programs and modules stored in the memory. The memory mainly includes a program storage area and a data storage area. The program storage area may store an operating system, at least one application program required for a function (such as a voice playback function, an image playback function and etc.); the data storage area may store data (such as audio data, contacts and etc.) created according to the use of the mobile phone. In addition, the memory may include a high-speed random access memory, and may also include a non-volatile memory, such as at least one disk storage device, a flash memory device, or other volatile solid-state memory devices.

The input unit may be configured to receive incoming numbers or character information, and generate a key signal related to user settings and function control of the mobile phone. Specifically, the input unit may include a touch panel and other input devices. The touch panel, also known as a touch screen, may collect a touch operation made by a user on or near the touch panel (for example, an operation made by the user on the touch panel or near the touch panel by means of a finger, a touch pen or any other suitable object or accessory), and drive the corresponding connection device according to a preset program.

In some embodiments of the present disclosure, the touch panel may include a touch detection device and a touch controller. The touch detection device is configured to detect a touch orientation of the user, detect a signal from the touch operation, and transmit the signal to the touch controller. The touch controller is configured to receive the touch information from the touch detection device, convert it into contact coordinates and send the contact coordinates to the processor, and is also configured to receive and execute a command from the processor. In addition, it is possible to realize the touch panel in resistive type, capacitive type, infrared type, surface acoustic wave type and other types. The input unit may include other input devices apart from the touch panel. Specifically, other input devices may include, but are not limited to one or more of a physical keypad, a function key (e. g. a volume control button, an on/off button, etc.), a trackball, a mouse and an operating rod.

The display unit may be used to display information that is input by the user or provided to the user and various menus of the mobile phone. The display unit may include a display panel, and in some embodiments of the present disclosure, the display panel may be configured in forms of a liquid crystal display (LCD), an organic light-emitting diode (OLED) and the like. Further, the touch panel may overlay the display panel. When the touch panel detects a touch operation on or near it, the touch operation is sent to the processor to determine which type the touch event belongs to, and then the processor provides a corresponding visual output on the display panel according to the type of the touch event.

The audio circuit, the loudspeaker and the microphone can provide an audio interface between the user and the mobile phone. The audio circuit can transmit an electrical signal converted from the received audio data to the loudspeaker, and the loudspeaker converts the electrical signal into an audio signal to be output. On the other hand, the microphone converts the collected audio signal into the electrical signal, and the audio circuit receives and converts the electrical signal into audio data, and transmits the audio data to the processor. After processed by the processor, the audio data is sent to, for example, another mobile phone via the radio-frequency circuit, or is output to the memory for further processing.

Wi-Fi is a short-distance wireless transmission technology, and the mobile phone can help the user to send and receive e-mails, browse websites, and access a streaming media by means of the Wi-Fi module which provides the user with wireless broadband access to the Internet. However, it may be understood that the Wi-Fi module is not a necessary component of the mobile phone and can be omitted as needed without changing the nature of the present disclosure.

The processor is a control center of the mobile phone and mounted on a circuit board assembly. The processor is coupled to various parts of the whole mobile phone by means a variety of interfaces and lines, and performs various functions of the mobile phone and data processing by running or executing software programs and/or modules stored in the memory and by invoking the data stored in the memory, so as to monitor the electronic device overall. In some embodiments of the present disclosure, the processor may include one or more processing units. In some embodiments of the present disclosure, the processor may be integrated with an application processor and a modem processor, in which the application processor mainly handles the operating system, the user interface and the application program, while the modem processor mainly deals with the wireless communication.

The camera assembly 100 may be used to take photos and videos to further improve the functional diversity of the mobile phone. In addition, the mobile phone is easy to carry around such that the image capturing is convenient and flexible.

The power source may be logically coupled to the processor by means of a power management system, to manage functions such as charging, discharging, and power management by means of the power management system. Although not shown, the mobile phone may also include a Bluetooth module, and a sensor (such as an attitude sensor, a light sensor and other sensors like a barometer, a hygrometer, a thermometer and an infrared sensor), which will not be described herein.

Reference throughout this specification to terms "an embodiment," "some embodiments," "an illustrative embodiment," "an example," "a specific example," or "some examples" means that a particular feature, structure, material, or characteristic described in connection with the embodiment or example is included in at least one embodiment or example of the present application. In this specification, the appearances of the aforesaid terms are not necessarily referring to the same embodiment or example. Moreover, the particular features, structures, materials, or characteristics described can be combined in any suitable manner in one or more embodiments or examples.

Although embodiments of the present disclosure have been illustrated and described above, it should be understood by those skilled in the art that changes, modifications, alternatives, and variations can be made in the embodiments without departing from principles and purposes of the present disclosure. The scope of this disclosure is defined by the claims .

## Claims

1. A camera assembly (100), comprising:
a lens frame (1) having a mounting cavity (11);
a plurality of first lenses (2) arranged at intervals in the mounting cavity (11), and a periphery of each first lens (2) being connected with an inner circumferential wall of the mounting cavity (11); and
a protection lens (3) arranged at an outer side of the lens frame (1), one of an inner surface and an outer surface of the protection lens (3) being provided with a first protruding part (31) or a first recessed part (32), and the first protruding part (31) or the first recessed part (32) being opposite to the first lens (2),
wherein the camera assembly (100) further comprises a decoration member (6), and the decoration member (6) comprises:
a support part (61) provided with a through transmission hole, and the first protruding part (31) or the first recessed part (32) being opposite to the transmission hole; and
a decoration part (62) connected with the support part (61) and surrounding a periphery of the protection lens (3),
wherein the protection lens (3) is spaced apart from the lens frame (1), and
the protection lens (3) is arranged on the support part (61),
**characterized in that** the decoration part (62) extends from the support part (61) in a direction perpendicular to the support part (61) and facing away from the lens frame (1), and
the protection lens (3) and the lens frame (1) are arranged on two opposite sides of the support part (61) and spaced apart from each other by the support part (61).

2. The camera assembly (100) according to claim 1, wherein the one of an inner surface and an outer surface of the protection lens (3) is etched to form the first protruding part (31) or the first recessed part (32).

3. The camera assembly (100) according to claim 1 or 2, wherein a central axis of the first protruding part (31) or the first recessed part (32) coincides with an optical axis of the first lens (2).

4. The camera assembly (100) according to any one of claims 1-3, wherein the other of the inner surface and the outer surface of the protection lens (3) is provided with a second protruding part (33) or a second recessed part (34), and the second protruding part (33) or the second recessed part (34) is opposite to the first lens (2).

5. The camera assembly (100) according to claim 4, wherein a central axis of the second protruding part (33) or the second recessed part (34) coincides with an optical axis of the first lens (2).

6. The camera assembly (100) according to claim 4, wherein the other of the inner surface and the outer surface of the protection lens (3) is etched to form the second protruding part (33) or the second recessed part (34).

7. The camera assembly (100) according to any one of claims 1-6, wherein an outer surface of the protection lens (3) is lower than or flush with an outer end face of the decoration part (62).

8. The camera assembly (100) according to any one of claims 1-7, wherein a light-shielding layer (12) is provided between at least one pair of adjacent first lenses (2) in the plurality of first lenses (2), and arranged on the inner circumferential wall of the mounting cavity (11).

9. The camera assembly (100) according to claim 8, wherein a surface of the light-shielding layer (12) facing towards an interior of the mounting cavity (11) is configured as a frosted surface.

10. The camera assembly (100) according to any one of claims 1-9, wherein the plurality of first lenses (2) are arranged at intervals in an axial direction of the mounting cavity (11).

11. The camera assembly (100) according to any one of claims 1-10, wherein a part of the inner surface of the protection lens (3) protrudes in a direction approaching a center of the lens frame (1) to form the first protruding part (31); or
wherein a part of the inner surface of the protection lens (3) is recessed in a direction running away from a center of the lens frame (1) to form the first recessed part (32).

12. The camera assembly (100) according to any one of claims 1-11, wherein a part of the outer surface of the protection lens (3) protrudes in a direction running away from a center of the lens frame (1) to form the first protruding part (31); or
wherein a part of the outer surface of the protection lens (3) is recessed in a direction approaching a center of the lens frame (1) to form the first recessed part (32).

13. An electronic device (500), comprising:
a housing assembly (520) provided with a mounting hole; and
a camera assembly (100) arranged in the mounting hole and configured as a camera assembly (100) according to any one of claims 1-12.

14. The electronic device (500) according to claim 13, wherein the camera assembly (100) is a front camera assembly of the electronic device (500), the housing assembly (520) comprises a cover plate, and the protection lens (3) is integrated with the cover plate; or
wherein the camera assembly (100) is a rear camera assembly of the electronic device (500), the housing assembly (520) comprises a rear cover provided with a through hole, and the protection lens (3) is opposite to the through hole.

## Patentansprüche

1. Kameraanordnung (100), Folgendes umfassend:
eine Linsenfassung (1) mit einem Montagehohlraum (11),
mehrere erste Linsen (2), die in Intervallen in dem Montagehohlraum (11) angeordnet sind, und wobei ein Außenumfang jeder ersten Linse (2) mit einer innen umlaufenden Wandung des Montagehohlraums (11) verbunden ist, und
eine Schutzlinse (3), die an einer Außenseite der Linsenfassung (1) angeordnet ist, wobei eines von einer Innenfläche und einer Außenfläche der Schutzlinse (3) mit einem ersten hervorstehenden Teil (31) oder einem ersten mit Vertiefung versehenen Teil (32) versehen ist und der erste hervorstehende Teil (31) oder der erste mit Vertiefung versehene Teil (32) gegenüber der ersten Linse (2) liegt,
wobei die Kameraanordnung (100) ferner ein Dekorationselement (6) umfasst und das Dekorationselement (6) Folgendes umfasst:
einen Trageteil (61), der mit einer Durchgangsübertragungsöffnung versehen ist, und wobei der erste hervorstehende Teil (31) oder der erste mit Vertiefung versehene Teil (32) gegenüber der Übertragungsöffnung liegt, und
einen Dekorationsteil (62), der mit dem Trageteil (61) verbunden ist und einen Außenumfang der Schutzlinse (3) umgibt,
wobei die Schutzlinse (3) von der Linsenfassung (1) beabstandet ist und
die Schutzlinse (3) an dem Trageteil (61) angeordnet ist,
**dadurch gekennzeichnet, dass** sich der Dekorationsteil (62) von dem Trageteil (61) in eine Richtung erstreckt, die senkrecht zu dem Trageteil (61) liegt, und von der Linsenfassung (1) weg weist, und
die Schutzlinse (3) und die Linsenfassung (1) an zwei gegenüberliegenden Seiten des Trageteils (61) angeordnet und durch den Trageteil (61) voneinander beabstandet sind.

2. Kameraanordnung (100) nach Anspruch 1, wobei die eine von der Innenfläche und der Außenfläche der Schutzlinse (3) geätzt ist, um den ersten hervorstehenden Teil (31) oder den ersten mit Vertiefung versehenen Teil (32) zu bilden.

3. Kameraanordnung (100) nach Anspruch 1 oder 2, wobei sich eine Mittelachse des ersten hervorstehenden Teils (31) oder des ersten mit Vertiefung versehenen Teils (32) mit einer optischen Achse der ersten Linse (2) deckt.

4. Kameraanordnung (100) nach einem der Ansprüche 1 bis 3, wobei die andere der Innenfläche und der Außenfläche der Schutzlinse (3) mit einem zweiten hervorstehenden Teil (33) oder einem zweiten mit Vertiefung versehenen Teil (34) versehen ist und der zweite hervorstehende Teil (33) oder der zweite mit Vertiefung versehene Teil (34) gegenüber der ersten Linse (2) liegt.

5. Kameraanordnung (100) nach Anspruch 4, wobei sich eine Mittelachse des zweiten hervorstehenden Teils (33) oder des zweiten mit Vertiefung versehenen Teils (34) mit einer optischen Achse der ersten Linse (2) deckt.

6. Kameraanordnung (100) nach Anspruch 4, wobei die andere von der Innenfläche und der Außenfläche der Schutzlinse (3) geätzt ist, um den zweiten hervorstehenden Teil (33) oder den zweiten mit Vertiefung versehenen Teil (34) zu bilden.

7. Kameraanordnung (100) nach einem der Ansprüche 1 bis 6, wobei eine Außenfläche der Schutzlinse (3) tiefer liegt als eine äußere Endfläche des Dekorationsteils (62) oder mit dieser bündig abschließt.

8. Kameraanordnung (100) nach einem der Ansprüche 1 bis 7, wobei zwischen mindestens einem Paar benachbarter erster Linsen (2) der mehreren ersten Linsen (2) eine Lichtabschirmungsschicht (12) bereitgestellt und an der innen umlaufenden Wandung des Montagehohlraums (11) angeordnet ist.

9. Kameraanordnung (100) nach Anspruch 8, wobei eine Oberfläche der Lichtabschirmungsschicht (12), die zu einem Inneren des Montagehohlraums (11) weist, als eine mattierte Oberfläche gestaltet ist.

10. Kameraanordnung (100) nach einem der Ansprüche 1 bis 9, wobei die mehreren ersten Linsen (2) in einer axialen Richtung des Montagehohlraums (11) in Intervallen angeordnet sind.

11. Kameraanordnung (100) nach einem der Ansprüche 1 bis 10, wobei ein Teil der Innenfläche der Schutzlinse (3) in eine Richtung hervorsteht, die sich einer Mitte der Linsenfassung (1) nähert, um den ersten hervorstehenden Teil (31) zu bilden, oder
wobei ein Teil der Innenfläche der Schutzlinse (3) in einer Richtung mit Vertiefung versehen ist, die von einer Mitte der Linsenfassung (1) weg verläuft, um den ersten mit Vertiefung versehenen Teil (32) zu bilden.

12. Kameraanordnung (100) nach einem der Ansprüche 1 bis 11, wobei ein Teil der Außenfläche der Schutzlinse (3) in einer Richtung hervorsteht, die von einer Mitte der Linsenfassung (1) weg verläuft, um den ersten hervorstehenden Teil (31) zu bilden, oder
wobei ein Teil der Außenfläche der Schutzlinse (3) in einer Richtung mit Vertiefung versehen ist, die sich einer Mitte der Linsenfassung (1) nähert, um den ersten mit Vertiefung versehenen Teil (32) zu bilden.

13. Elektronisches Gerät (500), Folgendes umfassend:
eine Gehäuseanordnung (520), die mit einer Montageöffnung versehen ist, und
eine Kameraanordnung (100), die in der Montageöffnung angeordnet und als Kameraanordnung (100) nach einem der Ansprüche 1 bis 12 gestaltet ist.

14. Elektronisches Gerät (500) nach Anspruch 13, wobei die Kameraanordnung (100) eine Frontkameraanordnung des elektronischen Geräts (500) ist, die Gehäuseanordnung (520) eine Deckplatte umfasst und die Schutzlinse (3) in die Deckplatte integriert ist, oder
wobei die Kameraanordnung (100) eine hintere Kameraanordnung des elektronischen Geräts (500) ist, wobei die Gehäuseanordnung (520) eine hintere Deckplatte umfasst, die mit einer Durchgangsöffnung versehen ist, und die Schutzlinse (3) gegenüber der Durchgangsöffnung liegt.

## Revendications

1. Ensemble caméra (100), comprenant :
un cadre de lentille (1) ayant une cavité de montage (11) ;
une pluralité de premières lentilles (2) agencées par intervalles dans la cavité de montage (11), et une périphérie de chaque première lentille (2) étant raccordée à une paroi circonférentielle interne de la cavité de montage (11) ; et
une lentille de protection (3) agencée sur un côté externe du cadre de lentille (1), une surface parmi une surface interne et une surface externe de la lentille de protection (3) étant pourvue d'une première partie saillante (31) ou d'une première partie évidée (32), et
la première partie saillante (31) ou la première partie évidée (32) étant à l'opposé de la première lentille (2),
l'ensemble caméra (100) comprenant en outre un élément de décoration (6), et l'élément de décoration (6) comprenant :
une partie de support (61) pourvue d'un trou de transmission traversant, et la première partie saillante (31) ou la première partie évidée (32) étant à l'opposé du trou de transmission ; et
une partie de décoration (62) raccordée à la partie de support (61) et entourant une périphérie de la lentille de protection (3),
la lentille de protection (3) étant espacée du cadre de lentille (1), et
la lentille de protection (3) étant agencée sur la partie de support (61),
**caractérisé en ce que** la partie de décoration (62) s'étend à partir de la partie de support (61) dans une direction perpendiculaire à la partie de support (61) et orientée dos au cadre de lentille (1), et
la lentille de protection (3) et le cadre de lentille (1) sont agencés sur deux côtés opposés de la partie de support (61) et espacés l'un de l'autre par la partie de support (61).

2. Ensemble caméra (100) selon la revendication 1, dans lequel la surface parmi une surface interne et une surface externe de la lentille de protection (3) est gravée pour former la première partie saillante (31) ou la première partie évidée (32).

3. Ensemble caméra (100) selon la revendication 1 ou la revendication 2, dans lequel un axe central de la première partie saillante (31) ou de la première partie évidée (32) coïncide avec un axe optique de la première lentille (2).

4. Ensemble caméra (100) selon l'une quelconque des revendications 1 à 3, dans lequel l'autre surface parmi la surface interne et la surface externe de la lentille de protection (3) est pourvue d'une deuxième partie saillante (33) ou d'une deuxième partie évidée (34), et la deuxième partie saillante (33) ou la deuxième partie évidée (34) est à l'opposé de la première lentille (2).

5. Ensemble caméra (100) selon la revendication 4, dans lequel un axe central de la deuxième partie saillante (33) ou de la deuxième partie évidée (34) coïncide avec un axe optique de la première lentille (2) .

6. Ensemble caméra (100) selon la revendication 4, dans lequel l'autre surface parmi la surface interne et la surface externe de la lentille de protection (3) est gravée pour former la deuxième partie saillante (33) ou la deuxième partie évidée (34).

7. Ensemble caméra (100) selon l'une quelconque des revendications 1 à 6, dans lequel une surface externe de la lentille de protection (3) est plus basse ou au même niveau qu'une face d'extrémité externe de la partie de décoration (62).

8. Ensemble caméra (100) selon l'une quelconque des revendications 1 à 7, dans lequel une couche de protection contre la lumière (12) est prévue entre au moins une paire de premières lentilles adjacentes (2) dans la pluralité de premières lentilles (2), et agencée sur la paroi circonférentielle interne de la cavité de montage (11).

9. Ensemble caméra (100) selon la revendication 8, dans lequel une surface de la couche de protection contre la lumière (12) faisant face à un intérieur de la cavité de montage (11) est configurée sous la forme d'une surface dépolie.

10. Ensemble caméra (100) selon l'une quelconque des revendications 1 à 9, dans lequel la pluralité de premières lentilles (2) sont agencées par intervalles dans une direction axiale de la cavité de montage (11).

11. Ensemble caméra (100) selon l'une quelconque des revendications 1 à 10, dans lequel une partie de la surface interne de la lentille de protection (3) fait saillie dans une direction s'approchant d'un centre du cadre de lentille (1) pour former la première partie saillante (31) ; ou
une partie de la surface interne de la lentille de protection (3) étant évidée dans une direction s'éloignant d'un centre du cadre de lentille (1) pour former la première partie évidée (32).

12. Ensemble caméra (100) selon l'une quelconque des revendications 1 à 11, dans lequel une partie de la surface externe de la lentille de protection (3) fait saillie dans une direction s'éloignant d'un centre du cadre de lentille (1) pour former la première partie saillante (31) ; ou
une partie de la surface externe de la lentille de protection (3) étant évidée dans une direction s'approchant d'un centre du cadre de lentille (1) pour former la première partie évidée (32).

13. Dispositif électronique (500), comprenant :
un ensemble logement (520) pourvu d'un trou de montage ; et
un ensemble caméra (100) agencé dans le trou de montage et configuré en tant qu'ensemble caméra (100) selon l'une quelconque des revendications 1 à 12.

14. Dispositif électronique (500) selon la revendication 13, dans lequel l'ensemble caméra (100) est un ensemble caméra avant du dispositif électronique (500), l'ensemble logement (520) comprend une plaque de couverture, et la lentille de protection (3) est intégrée à la plaque de couverture ; ou
l'ensemble caméra (100) étant un ensemble caméra arrière du dispositif électronique (500), l'ensemble logement (520) comprenant une couverture arrière pourvue d'un trou traversant, et la lentille de protection (3) étant à l'opposé du trou traversant.
